# EUROPÄISCHE PATENTSCHRIFT

(11) **EP 2 187 516 B1**
(45) Veröffentlichungstag und Bekanntmachung des Hinweises auf die Patenterteilung: **05.11.2014**
(21) Anmeldenummer: 08019904.5
(22) Anmeldetag: 14.11.2008
(51) Int. Cl.: H02M 5/22, H02J 3/14

(54) **Schaltungsanordnung parallel geschalteter Leistungssteller zur gleichmäßigen Verteilung der Leistungsaufnahme aus dem Wechselspannungsnetz**
Circuit arrangement of parallel power regulation devices for equal allocation of the input power supplied by the AC network
Circuit électronique des dispositifs de commande de puissance couplés en parallèle pour une égal distribution de la puissance absorbée du réseau de tension alternative

(43) Veröffentlichungstag der Anmeldung: 19.05.2010
(73) Patentinhaber: AEG Power Solutions GmbH, 59581 Warstein-Belecke (DE)
(72) Erfinder: Schaffarra, Christian, 59602 Rüthen (DE)
(74) Vertreter: Graefe, Jörg

(56) Entgegenhaltungen:
- DE-A1- 2 228 709

## Beschreibung

Die vorliegende Erfindung betrifft eine Schaltungsanordnung mit wenigstens zwei Leistungsstellern gemäß Anspruch 1, mit je einem Netzeingang zum parallelen Anschließen der Leistungssteller an ein Wechselspannungsnetz, zumindest je einem Lastausgang zum Anschließen von Lasten, die über die Leistungssteller mit elektrischer Energie aus dem Wechselspannungsnetz versorgt werden können und mit steuerbaren Schaltmitteln zum Verbinden des Netzeingangs mit dem oder den Lastausgängen. Außerdem weist jeder Leistungssteller ein Steuermittel zum Steuern der Schaltmittel auf, wobei die Steuermittel geeignet und eingerichtet sind, die Schaltmittel während eines Taktes für die Dauer einer oder mehrerer Perioden der Netzspannung zum Schalten einer Verbindung zwischen dem Netzeingang und dem Lastausgang oder den Lastausgängen anzusteuern, um so die an die Lasten angegebene Leistung bzw. elektrische Energie einzustellen.

Die Erfindung betrifft ferner ein Verfahren zum Betreiben einer derartigen Schaltungsanordnung gemäß Anspruch 7.

Bevorzugte Ausführungsformen sind in den abhängigen Ansprüchen eingegeben.

Aus dem Stand der Technik sind verschiedene Schaltungsanordnungen und Verfahren bekannt, mit denen Lasten über parallel geschaltete Leistungssteller mit elektrischer Energie versorgt werden können. Beispielhaft sei auf die Druckschriften DE 22 28 709 A, EP 1 150 419 B1, DE 44 37 966 C1 und DE 34 30 786 A1 hingewiesen. Alle Schaltungsanordnungen und Verfahren, die in den genannten Druckschriften offenbart sind, haben eine optimale zeitliche Verteilung der Belastung des Versorgungsnetzes zum Ziel.

Die Druckschrift DE 22 28 709 offenbart eine Schaltungsanordnung und ein Verfahren, mit dem es möglich, ist, sicherzustellen, dass elektrische Heizgeräte nacheinander eingeschaltet werden, wobei jede so lange eingeschaltet bleibt, bis eine gewünschte Temperatur in dem durch die eingeschaltete Heizung beheizten Raum erreicht ist. Wird die Temperatur erreicht, wird die nächste Heizung im nächsten Raum eingeschaltet. Wird die Temperatur nicht erreicht, werden die anderen Räume nicht beheizt.

Mit der Schaltungsanordnung gemäß DE 22 28 709 ist es nicht möglich eine vorbestimmte Energiemenge zu einer Last zu übertragen. Es ist ferner nicht möglich alle Lasten gleichermaßen mit Energie zu versorgen. Es kann immer nur eine einzige Last mit Energie versorgt werden.

Insbesondere die Druckschriften DE 34 30 786 A1 und DE 44 37 966 C1 offenbaren Schaltungsanordnungen, die nach dem Prinzip der Vollschwingungspaketsteuerung arbeiten. D. h., die Lasten werden innerhalb eines mehrere Netzperioden umfassenden Taktes für eine Anzahl von Perioden eingeschaltet, um während dieser Perioden die gewünschte elektrische Energie aus dem Netz zu den Lasten zu transportieren. Die eingestellte Leistung ergibt sich dann im Verhältnis der Einschaltzeit während eines Taktes zur gesamten Taktlänge.

Um eine möglichst gleichmäßige Netzbelastung zu erreichen, wird in der Druckschrift DE 34 30 786 A1 offenbart, dass die Leistungssteller einer Schaltungsanordnung an ihnen zugeordneten Zeitpunkten innerhalb eines Taktes eingeschaltet werden. Umfasst der Takt beispielsweise fünfzig Perioden, und sind in der Schaltungsanordnung fünf Leistungssteller vorgesehen, wird der erste Leistungssteller zur ersten Periode eingeschaltet, der zweite zur elften, der dritte zur einundzwanzigsten, der vierte zur einundreißigsten und der fünfte zur einundvierzigsten Periode. Die Einschaltdauer hängt dann von der einzustellenden Leistung ab. Das in dieser Druckschrift offenbarte Verfahren erfordert eine übergeordnete Steuerung, die die Leistungssteller ansteuert, sobald die Einschaltzeitpunkte erreicht sind. Außerdem hat das Verfahren den Nachteil, dass es immer wieder zu Schaltpausen kommen kann, die zu einer erhöhten Welligkeit des aus dem Netz entnommenen Stroms führen können.

Das in der Druckschrift DE 44 37 966 C1 offenbarte Verfahren sorgt durch eine Regelung dafür, dass eine möglichst gleichmäßige Verteilung der Einschaltzeiten der Leistungssteller über die gesamte Taktdauer erfolgt. Das Verfahren ermöglicht eine dynamische Anpassung der Einschaltzeiten. Die Anpassung erfolgt jedoch iterativ, d. h. mit jedem weiteren Takt erfolgt ein Anpassungsschritt zur Vergleichmäßigung der Belastung des Netzes. Erst nachdem die Anpassungsvorgänge abgeschlossen sind, ist eine gleichmäßige Netzbelastung über die gesamte Taktdauer eingestellt. Das Verfahren ist daher nicht geeignet, bei schnell wechselnden Lasten zum Erreichen einer gleichmäßigen Netzbelastung eingesetzt werden. Außerdem muss ein hoher Rechenaufwand geleistet werden, um zu einer gleichmäßigen Verteilung der Netzbelastung über die gesamte Taktdauer zu kommen.

Vor dem Hintergrund der Nachteile der aus dem Stand der Technik bekannten Verfahren lag der Erfindung die Aufgabe zugrunde, eine Schaltungsanordnung und ein Verfahren zum Betreiben der Schaltungsanordnung vorzuschlagen, mit welchen über parallel geschaltete Leistungssteller elektrische Lasten bei gleichmäßiger Netzbelastung mit elektrischer Energie versorgen können, ohne dass dazu ein großer steuerungstechnischer Aufwand notwendig ist.

Diese Aufgabe wird im Hinblick auf die Schaltungsanordnung dadurch gelöst, dass ein erster der Leistungssteller einen Steuerausgang und ein letzter der Leistungssteller einen Steuereingang hat, dass der Steuerausgang des ersten Leistungsstellers und der Steuereingang des letzten Leistungsstellers zumindest mittelbar miteinander verbunden sind, dass das Steuermittel des ersten Leistungsstellers geeignet und eingerichtet ist, ein an dem Steuerausgang dieses Leistungsstellers anliegendes erstes Signal zu erzeugen, wenn die Schaltmittel dieses Leistungsstellers öffnen oder geöffnet sind und dass das Steuermittel des letzten Leistungsstellers geeignet und eingerichtet ist, die Schaltmittel in diesem Leistungssteller zum Schließen anzusteuern, wenn am Steuereingang dieses Leistungsstellers ein erstes Signal anliegt. Diese Schaltungsanordnung kann dann erfindungsgemäß so betrieben werden, dass der erste Leistungssteller und jeder weitere Leistungssteller an ihren Steuerausgängen ein erstes Signal bereitstellen, wenn die Schaltmittel in dem ersten Leistungssteller oder weiteren Leistungssteller öffnen oder geöffnet sind.

Durch die Erfindung werden die Leistungssteller einer erfindungsgemäßen Schaltungsanordnung in einer Reihenfolge gesetzt. Zum Beginn eines Taktes werden die Schaltmittel des ersten Leistungsstellers geschlossen. Über die geschlossenen Schaltmittel werden die an den Leistungssteller angeschlossenen Lasten entsprechend der eingestellten Sollwerte mit elektrischer Energie über eine oder mehrere einander folgenden Perioden versorgt. Ist der Sollwert der Leistung erreicht, werden die Schaltmittel geöffnet und am Steuerausgang des ersten Leistungsstellers wird ein erstes Signal bereit gestellt. Dieses erste Signal wird an den nächsten Leistungssteller in der Reihenfolge übermittelt, der es über seinen Steuereingang aufnimmt. Aufgrund des ersten Signals des vorhergehenden Leistungsstellers schließt der Leistungssteller dann seine Schaltmittel bis der gewünschte Sollwert der Leistung an die Lasten übertragen worden ist. Die Schaltmittel werden geöffnet und das erste Signal am Steuerausgang dieses Leistungsstellers bereit gestellt und der nächstfolgende Leistungssteller wird durch dieses erste Signal aktiviert. Durch diese Art und Weise der Verknüpfung der Leistungssteller werden die Leistungssteller bzw. die an die Leistungssteller angeschlossen Lasten nacheinander aktiviert bzw. mit elektrischer Energie versorgt. Eine gleichmäßige Verteilung der Leistungsentnahme aus dem Netz wird dadurch erreicht.

Gemäß der Erfindung kann die Schaltungsanordnung genau zwei Leistungssteller aufweisen, nämlich den ersten Leistungssteller und den letzten Leistungssteller, wobei der Steuerausgang des ersten Leistungsstellers und der Steuereingang des letzten Leistungsstellers unmittelbar miteinander verbunden sind.

In der Regel wird die Schaltungsanordnung jedoch weitere Leistungssteller aufweisen. Diese weiteren Leistungssteller weisen die Merkmale des ersten Leistungsstellers und des letzten Leistungsstellers auf. D. h., sie haben einen Steuereingang und einen Steuerausgang. Der Steuerausgang des ersten Leistungsstellers ist unmittelbar mit dem Steuereingang eines der weiteren Leistungsstellers verbunden. Unmittelbar heißt, dass der Steuereingang und der Steuerausgang ohne Zwischenschaltung eines beliebigen anderen Leistungsstellers miteinander verbunden sind.

Der Steuerausgang jedes der weiteren Leistungssteller ist unmittelbar mit dem Steuereingang eines der weiteren Leistungsstellers oder des letzten Leistungsstellern verbunden. Der Steuereingang des letzten Leistungsstellers ist vorteilhaft unmittelbar mit dem Ausgang eines der weiteren Leistungssteller verbunden.

Das erste Signal welches an dem Steuerausgang eines Leistungsstellers bereitgestellt wird, kann ohne Pause nach dem Öffnen oder während des Öffnen des Schaltmittels bereitgestellt werden. Alternativ ist es möglich, dass das erste Signal erst nach einer Pause zumindest einer Periode der Netzspannung nach dem Öffnen des Schaltmittel bereitgestellt wird.

Bei einem erfindungsgemäßen Verfahren kann das Steuermittel jedes weiteren Leistungsstellers oder des letzten Leistungsstellers Schaltmittel desselben Leistungsstellers zum Schließen ansteuern, wenn am Steuereingang desselben Leistungsstellers ein erstes Signal anliegt. Das Schließen der Schaltmittel kann dabei ohne Pause nach dem Auftreten des ersten Signals am Steuereingang erfolgen. Ebenso ist es möglich, dass das Schließen der Schaltmittel nach einer Pause von zumindest einer Periode der Netzspannung nach dem Auftreten des ersten Signals am Steuereingang erfolgt.

Beispiele für erfindungsgemäße Verfahren und ein Beispiel für eine erfindungsgemäße Schaltungsanordnung sind anhand der Zeichnung näher beschrieben. Darin zeigen:
- Fig. 1: den Verlauf des gesamten Laststroms der Schaltungsanordnung und die Lastströme der einzelnen Steller bei-einem ersten erfindungsgemäßen Verfahren,
- Fig. 2: den gesamten Laststrom der Schaltungsanordnung und die Lastströme der Steller bei einem zweiten erfindungsgemäßen Verfahren und
- Fig. 3: eine erfindungsgemäße Schaltungsanordnung.

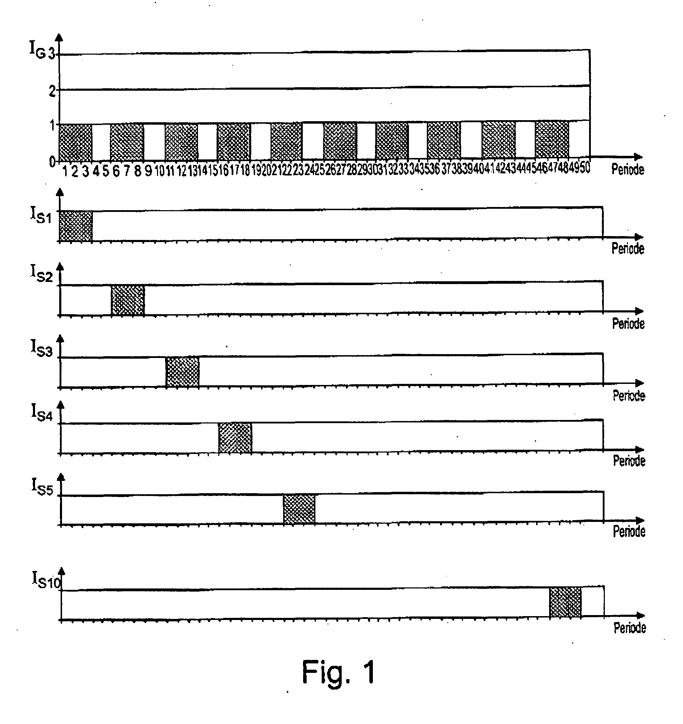

In Figur 1 ist ein Beispiel für ein erfindungsgemäßes Verfahren gezeigt, welches mit einer erfindungsgemäßen Schaltungsanordnung mit zehn Leistungsstellern S1 bis S10 durchgeführt wird. Dargestellt sind verschiedenen Verläufe der Effektivströme der gesamten Schaltungsanordnung (oberstes Diagramm) sowie die Lastströme Is₁ bis Is₁₀ der einzelnen Leistungssteller S1 bis S10 der erfindungsgemäßen Schaltungsanordnung.

In dem dargestellten Beispiel sind an die Leistungssteller S1 bis S10 gleiche Lasten angeschlossen. Die Lasten sollen über die Leistungssteller S1 bis S10 mit der gleichen elektrischen Energie versorgt werden. Die Effektivströme sind bei gleicher Spannung daher identisch. In den Diagrammen sind normierte Effektivströme dargestellt. Als Zeiteinheit ist eine Periode einer Schwingung der Netzspannung gewählt. Dargestellt sind die Stromverläufe über insgesamt fünfzig Perioden. Fünfzig Perioden entsprechen einem Takt der Schaltungsanordnung, die nach dem Prinzip der Vollschwingungspaketsteuerung arbeitet. Jeder Last, die an einen der Leistungssteller S1 bis S10 angeschlossen ist, wird innerhalb der Zeit von drei Perioden mit elektrischer Energie versorgt. Die Vollschwingungspakete haben daher eine Größe von drei Perioden.

Die Energieversorgung erfolgt gleichmäßig verteilt, so dass das Netz während des gesamten Takts möglichst gleichmäßig und optimal ausgelastet ist. Die Rückwirkung der Schaltungsanordnung und der an die Schaltungsanordnung angeschlossenen Lasten auf das Versorgungsnetz kann dadurch minimiert werden.

Sollen die an die Leistungssteller S1 bis S10 angeschlossen Lasten mit unterschiedlich großen Mengen elektrische Energie versorgt werden, werden die Leistungssteller S1 bis S10 für unterschiedliche Zeitdauern eingeschaltet, um so die Lasten für unterschiedliche Anzahlen von Perioden mit elektrischer Energie zu versorgen. Die Steuerung der Leistungssteller S1 bis S10 erfolgt so, dass zum Beginn des Taktes stets der erste Leistungssteller S1 einschaltet. Erst nachdem der Leistungssteller S1 ausgeschaltet ist, schaltet der nächste Leistungssteller, nämlich der Leistungssteller S2 ein. Im weiteren schaltet jeder Leistungssteller erst dann ein, wenn der vorhergehende Leistungssteller ausgeschaltet ist. Die Leistungssteller sind dazu in einer Reihenfolge gebracht.

Nach dem Verfahrensbeispiel gemäß der Figur 1 gibt es zwischen dem Ausschalten des vorhergehenden Leistungsstellers und dem Einschalten des auf diesen folgenden Leistungssteller jeweils eine Pause von zwei Perioden. Diese Pause von zwei Perioden, in denen kein Leistungssteller eingeschaltet ist, ermöglicht eine einfache Steuerung der Leistungssteller S1 bis S10 der Schaltungsanordnung. Die Pausen können allerdings entfallen.

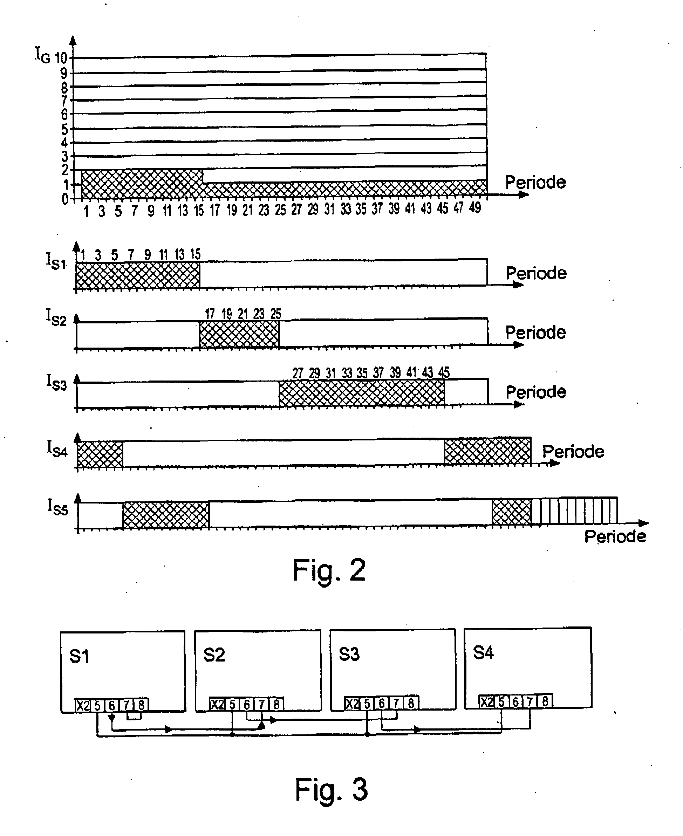

Ein Beispiel, bei dem die Pausen zwischen dem Durchschalten des Leistungsstellers und dem Durchschalten des folgenden Leistungsstellers entfallen, ist in Figur 2 dargestellt. Bei dem Beispiel gemäß Figur 2 werden die Leistungssteller S1 bis S5 für unterschiedlich lange Schwingungspakete oder Anzahlen von Perioden durchgeschaltet, um die an die Leistungssteller S1 bis S5 angeschlossenen Lasten mit unterschiedlicher elektrischer Energie zu versorgen. Auch hier sind die Leistungssteller S1 bis S5 in eine Reihenfolge gebracht, wobei der Leistungssteller S1 der erste Leistungssteller ist und S5 der letzte Leistungssteller. Zum Beginn des Taktes mit der ersten Periode schaltet der erste Leistungssteller S1 ein und versorgt die daran angeschlossene Last mit elektrischer Energie. Die Versorgung erfolgt für insgesamt fünfzehn Perioden. Dann schaltet der erste Leistungssteller S1 ab.

Direkt im Anschluss an den ersten Leistungssteller S1 schaltet dann der zweite Leistungssteller S2 ein und zwar für insgesamt zehn Perioden, nämlich der sechszehnten bis zur fünfundzwanzigsten Periode. Die an den zweiten Leistungssteller S2 angeschlossenen Lasten werden mit geringerer elektrischer Energie versorgt als die an den ersten Leistungssteller S1 angeschlossenen Lasten. Sobald der zweite Leistungssteller S2 mit dem Ende der fünfundzwanzigsten Periode abschaltet, schaltet der dritte Leistungssteller S3 mit dem Beginn der sechsundzwanzigsten Periode ein und bleibt bis zur fünfundvierzigsten Periode eingeschaltet.

Direkt im Anschluss an die fünfundvierzigste Periode schaltet dann der vierte Leistungssteller S4 mit dem Beginn der sechsundvierzigsten Periode ein. Der vierte Leistungssteller S4 soll die an den vierten Leistungssteller S4 angeschlossenen Lasten für insgesamt zehn Perioden, d. h. für zehn Vollschwingungspakete mit elektrischer Energie versorgen. Der Takt hat allerdings nur fünfzig Perioden. Das führt dazu, dass die an den vierten Leistungssteller S4 angeschlossenen Lasten für fünf Perioden, nämlich für die Perioden sechsundvierzig bis fünfzig in dem einen Takt und für weitere fünf Perioden, nämlich die Perioden eins bis fünf in dem auf diesen Takt folgenden Takt eingeschaltet werden. Da jedoch mit dem Beginn des folgenden Takts auch der erste Leistungssteller S1 eingeschaltet wird, erfolgt während der ersten fünf Perioden jeden Taktes sowohl eine Versorgung der an den ersten Leistungssteller S1 angeschlossenen Lasten als auch der an den vierten Leistungssteller S4 angeschlossenen Lasten.

Außerdem müssen auch noch die an den fünften Leistungssteller S5 angeschlossenen Lasten mit elektrischer Energie versorgt werden. Dieses gelingt dadurch, dass nach dem Abschalten des vierten Leistungsstellers S4 mit dem Ende der fünften Periode zum Beginn der sechsten Periode der fünfte Leistungssteller S5 einschaltet um für insgesamt zehn Perioden die an den fünften Leistungssteller S5 angeschlossenen Lasten mit elektrischer Energie zu versorgen. Die elektrische Energieversorgung der an den fünften Leistungssteller S5 angeschlossenen Lasten erfolgt dabei gleichzeitig mit der Energieversorgung der an den ersten Leistungssteller S1 angeschlossenen Lasten, der ebenfalls für die sechste bis fünfzehnte Periode eingeschaltet ist.

Mit dem erfindungsgemäßen Verfahren wie es in Figur 2 dargestellt wird, wird eine gleichmäßige Auslastung des Netzes erreicht. Die Versorgung der an die Leistungssteller S1 bis S5 angeschlossenen Lasten erfolgt möglichst verteilt über die gesamte Taktdauer. Da der Takt jedoch nicht ausreicht, dass alle Leistungssteller allein betrieben werden, werden die Leistungssteller zum Teil auch gleichzeitig betrieben, was auf die gleichmäßige zeitliche Verteilung der Belastungen des Netzes jedoch keinen Einfluss hat. Selbst wenn die Durchschaltdauer des einen oder anderen Leistungsstellers weiter erhöht werden würde, würde dies nur zu einer weiteren Überlappung führen, d. h. dass für weitere Perioden zwei oder mehr Leistungssteller gleichzeitig ihre angeschlossenen Lasten mit elektrischer Energie versorgen.

Wie das erfindungsgemäße Verfahren gemäß Figur 1 oder gemäß Figur 2 mit einer Schaltungsanordnung gelöst werden kann, ist in der Figur 3 schematisch dargestellt. Figur 3 zeigt vier Leistungssteller S1 bis S4, wobei der Leistungssteller S1 der erste Leistungssteller und der Leistungssteller S4 der letzte Leistungssteller ist und die Leistungssteller S1 bis S4 in einer Reihenfolge gebracht sind. Die Leistungssteller S1 bis S4 weisen Steuereingänge 7 und Steuerausgänge 6 auf. Außerdem haben sie jeweils einen Masseanschluss 5. Die Masseanschlüsse 5 der Leistungssteller S1 bis S4 sind miteinander verbunden.

Die Leistungssteller S1 bis S4 sind so konstruiert, dass sie einschalten, sobald an dem Steuereingang 7 ein Signal anliegt. Die Leistungssteller bleiben dann so lange eingeschaltet, wie es erforderlich ist, um den eingestellten Sollwert zu erreichen. Sobald der Sollwert erreicht ist, wird die Versorgung der an die Leistungssteller angeschlossenen Lasten unterbrochen und ein erstes Signal erzeugt welches am Steuerausgang 6 zur Verfügung gestellt wird. Da der Steuerausgang 6 jeweils mit dem Steuereingang 7 des nachfolgenden Leistungsstellers S2 bis S4 verbunden ist, wird dieser dann aktiviert. Der Leistungssteller kann die benötigte Energie bereitstellen, und sobald die gewünschte Energie bereit gestellt worden ist, schaltet der Leistungssteller ab und erzeugt an seinem Steuerausgang 6 ein erstes Signal. Jeder Leistungssteller S2 bis S4 schaltet also immer dann ein, wenn er von seinem vorausgehenden Leistungssteller S1 bis S3 ein erstes Signal an seinem Steuereingang 7 erhält.

Lediglich der Steuereingang 7 des ersten Leistungsstellers ist nicht mit einem anderen Leistungssteller verbunden. Der erste Leistungssteller S1 erhält sein erstes Signal zum Starten der Energieversorgung der angeschlossenen Lasten von seiner internen Taktsteuerung und zwar immer zum Beginn eines Taktes.

## Patentansprüche

1. Schaltungsanordnung mit wenigstens zwei Leistungsstellern (S1, S2, S3, S4)
- mit je einem Netzeingang zum parallelen Anschließen der Leistungssteller (S1, S2, S3, S4) an ein Wechselspannungsnetz,
- mit zumindest je einem Lastausgang zum Anschließen von Lasten, die über die Leistungssteller (S1, S2, S3, S4) mit elektrischer Energie aus dem Wechselstromnetz versorgbar sind,
- mit steuerbaren Schaltmitteln zum Verbinden des Netzeingangs mit dem oder den Lastausgängen und
- mit je einem Steuermittel zum Steuern der Schaltmittel, wobei die Steuermittel geeignet und eingerichtet sind, die Schaltmittel während eines Taktes höchstens einmal für die Dauer einer oder mehrerer aufeinanderfolgender Perioden der Netzspannung zum Schließen einer Verbindung zwischen dem Netzeingang und dem Lastausgang oder den Lastausgängen anzusteuern, um so die an die Lasten abgegebene Leistung einzustellen,
- wobei ein erster der Leistungssteller (S1) einen Steuerausgang (6) und ein letzter der Leistungsteller (Fig. 3, S4; Fig. 1, S10; Fig. 2, S5) einen Steuereingang (7) hat,
- wobei der Steuerausgang (6) des ersten Leistungsstellers (S1) und der Steuereingang (7) des letzten Leistungsstellers (Fig. 3, S4; Fig. 1, S10; Fig. 2, S5) zumindest mittelbar miteinander verbunden sind,
- wobei das Steuermittel des ersten Leistungsstellers (S1) geeignet und eingerichtet ist, ein an dem Steuerausgang (6) dieses Leistungsstellers (S1) anliegendes erstes Signal zu erzeugen, wenn die Schaltmittel dieses Leistungsstellers (S1) öffnen oder geöffnet sind und
- wobei das Steuermittel des letzten Leistungsstellers (Fig. 3, S4; Fig. 1, S10; Fig. 2, S5) geeignet und eingerichtet ist, die Schaltmittel in diesem Leistungssteller (Fig. 3, S4 bzw. Fig. 1, S10; Fig. 2, S5) zum Schließen anzusteuern, wenn am Steuereingang (7) dieses Leistungsstellers (Fig. 3, S4 bzw. Fig. 1, S10; Fig. 2, S5) ein erstes Signal anliegt,
**dadurch gekennzeichnet,**
- **dass** der Steuereingang (7) des ersten Leistungsstellers nicht mit einem anderen Leistungssteller verbunden ist und
- **dass** der erste Leistungssteller (S1) eine interne Taktsteuerung hat und
- **dass** der erste Leistungssteller (S1) von der internen Taktsteuerung immer zum Beginn eines Taktes ein erstes Signal zum Starten der Energieversorgung der angeschlossenen Lasten erhält.

2. Schaltungsanordnung nach Anspruch 1, **dadurch gekennzeichnet, dass** die Schaltungsanordnung genau zwei Leistungssteller aufweist und der Steuerausgang des ersten Leistungsstellers und der Steuereingang des letzten Leistungsstellers unmittelbar miteinander verbunden sind.

3. Schaltungsanordnung nach Anspruch 1 oder 2, **dadurch gekennzeichnet, dass** die Schaltungsanordnung weitere Leistungssteller (Fig. 3, S2, S3 bzw. Fig. 1 und 2, S2 bis S9) aufweist, die Merkmale des ersten Leistungsstellers (S1) und des letzten Leistungsstellers (Fig. 3, S4 bzw. Fig. 1, S10; Fig. 2, S5) aufweisen, d.h. einen Steuereingang (7) und einen Steuerausgang (6) aufweisen.

4. Schaltungsanordnung nach Anspruch 3, **dadurch gekennzeichnet, dass** der Steuerausgang (6) des ersten Leistungsstellers (S2) unmittelbar mit dem Steuereingang (7) eines der weiteren Leistungssteller (Fig. 3, S2, S3 bzw. Fig. 1 und 2, S2 bis S9) verbunden ist.

5. Schaltungsanordnung nach Anspruch 3 oder 4, **dadurch gekennzeichnet, dass** der Steuerausgang (6) jedes der weiteren Leistungssteller (Fig. 3, S2, S3 bzw. Fig. 1 und 2, S2 bis S9) unmittelbar mit dem Steuereingang (7) eines der weiteren Leistungssteller (Fig. 3, S2, S3 bzw. Fig. 1 und 2, S2 bis S9) oder des letzten Leistungsstellers (Fig. 3, S4 bzw. Fig. 1, S10; Fig. 2, S5) verbunden ist.

6. Schaltungsanordnung nach einem der Ansprüche 3 bis 5, **dadurch gekennzeichnet, dass** der Steuereingang (7) des letzten Leistungsstellers (Fig. 3, S4 bzw. Fig. 1, S10; Fig. 2, S5) unmittelbar mit dem Ausgang (6) eines der weiteren Leistungssteller (Fig. 3, S2, S3 bzw. Fig. 1 und 2, S2 bis S9) verbunden ist.

7. Verfahren zum Betreiben einer Schaltungsanordnung nach einem der Ansprüche 1 bis 6, **dadurch gekennzeichnet, dass** der erste Leistungssteller (S1) und jeder weitere Leistungssteller (Fig. 3, S2, S3 bzw. Fig. 1 und 2, S2 bis S9) an ihren Steuerausgängen (6) ein erstes Signal bereitstellen, wenn die Schaltmittel in dem ersten Leistungsteller (S1) oder weiteren Leistungstellern (Fig. 3, S2, S3 bzw. Fig. 1 und 2, S2 bis S9) öffnen oder geöffnet sind.

8. Verfahren nach Anspruch 7, **dadurch gekennzeichnet, dass** das erste Signal ohne Pause nach dem Öffnen oder während des Öffnens der Schaltmittel bereitgestellt wird.

9. Verfahren nach Anspruch 7, **dadurch gekennzeichnet, dass** das erste Signal nach einer Pause von zumindest einer Periode der Netzspannung nach dem Öffnen der Schaltmittel bereitgestellt wird.

10. Verfahren nach einem der Ansprüche 7 bis 8, **dadurch gekennzeichnet, dass** das Steuermittel jedes weiteren Leistungsstellers (Fig. 3, S2, S3 bzw. Fig. 1 und 2, S2 bis S9) oder des letzten Leistungsstellers (Fig. 3, S4 bzw. Fig. 1, S10; Fig. 2, S5) die Schaltmittel des weiteren Leistungsstellers (Fig. 3, S2, S3 bzw. Fig. 1 und 2, S2 bis S9) oder des letzten Leistungsstellers (Fig. 3, S4 bzw. Fig. 1, S10; Fig. 2, S5) zum Schließen ansteuern, wenn am Steuereingang des weiteren Leistungsstellers (Fig. 3, S2, S3 bzw. Fig. 1 und 2, S2 bis S9) oder des letzten Leistungsstellers (Fig. 3, S4 bzw. Fig. 1, S10; Fig. 2, S5) ein erstes Signal anliegt.

11. Verfahren nach Anspruch 10, **dadurch gekennzeichnet, dass** das Schließen der Schaltmittel ohne Pause nach dem Auftreten des ersten Signals am Steuereingang erfolgt.

12. Verfahren nach Anspruch 10, **dadurch gekennzeichnet, dass** das Schließen der Schaltmittel nach einer Pause von zumindest einer Periode der Netzspannung nach dem Auftreten des ersten Signals am Steuereingang erfolgt.

## Claims

1. Circuit arrangement having at least two power controllers (S1, S2, S3, S4)
- having in each case a system input for parallel connection of the power controllers (S1, S2, S3, S4) to an AC voltage system,
- having at least in each case one load output for connection of loads which can be supplied with electrical energy from the AC system via the power controllers (S1, S2, S3, S4),
- having controllable switching means for connecting the system input with the load output or outputs, and
- having in each case a control means for controlling the switching means, wherein the control means is suitable and set up for actuating the switching means during a cycle at most once for the duration of one or more consecutive periods of the system voltage to close a connection between the system input and the load output or the load outputs in order thus to set the power output to the loads,
- wherein a first one of the power controllers (S1) has a control output (6) and a final one of the power controllers (figure 3, S4; figure 1, S10; figure 2, S5) has a control input (7),
- wherein the control output (6) of the first power controller (S1) and the control input (7) of the final power controller (figure 3, S4; figure 1, S10; figure 2, S5) are at least indirectly connected to one another,
- wherein the control means of the first power controller (S1) is suitable and set up for generating a first signal present at the control output (6) of said power controller (S1) if the switching means of said power controller (S1) open or have been opened, and
- wherein the control means of the final power controller (figure 3, S4; figure 1, S10; figure 2, S5) is suitable and set up for actuating the switching means in said power controller (figure 3, S4; figure 1, S10; figure 2, S5) to close if a first signal is present at the control input (7) of said power controller (figure 3, S4; figure 1, S10; figure 2, S5),
**characterized**
- **in that** the control input (7) of the first power controller is not connected to another power controller, and
- **in that** the first power controller (S1) has an internal clock controller, and
- **in that** the first power controller (S1) always receives a first signal for starting the power supply of the connected loads from the internal clock controller at the beginning of a cycle.

2. Circuit arrangement according to claim 1, **characterized in that** the circuit arrangement has precisely two power controllers and the control output of the first power controller and the control input of the final power controller are directly connected to one another.

3. Circuit arrangement according to Claim 1 or 2, **characterized in that** the circuit arrangement has further power controllers (figure 3, S2, S3 or figures 1 and 2, S2 to S9) which have features of the first power controller (S1) and the final power controller (figure 3, S4; figure 1, S10; figure 2, S5), that is to say a control input (7) and a control output (6).

4. Circuit arrangement according to Claim 3, **characterized in that** the control output (6) of the first power controller (S1) is directly connected to the control input (7) of one of the further power controllers (figure 3, S2, S3 or figures 1 and 2, S2 to S9).

5. Circuit arrangement according to Claim 3 or 4, **characterized in that** the control output (6) of each of the further power controllers (figure 3, S2, S3 or figures 1 and 2, S2 to S9) is directly connected to the control input (7) of one of the further power controllers (figure 3, S2, S3 or figures 1 and 2, S2 to S9) or of the final power controller (figure 3, S4, or figure 1, S10; figure 2, S5).

6. Circuit arrangement according to any of Claims 3 to 5, **characterized in that** the control input (7) of the final power controller (figure 3, S4, or figure 1, S10; figure 2, S5) is directly connected to the output (6) of one of the further power controllers (figure 3, S2, S3 or figures 1 and 2, S2 to S9).

7. Method for operating a circuit arrangement according to any of Claims 1 to 6, **characterized in that** the first power controller (S1) and each further power controller (figure 3, S2, S3 or figures 1 and 2, S2 to S9) provide a first signal at their control outputs (6) if the switching means in the first power controller (S1) or further power controllers (figure 3, S2, S3 or figures 1 and 2, S2 to S9) open or have been opened.

8. Method according to Claim 7, **characterized in that** the first signal is provided without a pause after the switching means opens or while it is opening.

9. Method according to Claim 7, **characterized in that** the first signal is provided after a pause of at least one period of the system voltage after the switching means opens.

10. Method according to any of Claims 7 to 8, **characterized in that** the control means of each further power controller (figure 3, S2, S3 or figures 1 and 2, S2 to S9) or of the final power controller (figure 3, S4, or figure 1, S10; figure 2, S5) actuates the switching means of the further power controller (figure 3, S2, S3 or figures 1 and 2, S2 to S9) or of the final power controller (figure 3, S4, or figure 1, S10; figure 2, S5) to close if a first signal is present at the control input of the further power controller (figure 3, S2, S3 or figures 1 and 2, S2 to S9) or of the final power controller (figure 3, S4, or figure 1, S10; figure 2, S5).

11. Method according to Claim 10, **characterized in that** the switching means is closed without a pause after the first signal appears at the control input.

12. Method according to Claim 10, **characterized in that** the switching means is closed after a pause of at least one period of the system voltage after the first signal appears at the control input.

## Revendications

1. Agencement de circuit doté d'au moins deux dispositifs de commande de puissance (S1, S2, S3, S4) _{:}
- avec respectivement une entrée de réseau servant au raccordement parallèle des dispositifs de commande de puissance (S1, S2, S3, S4) à un réseau de tension alternative ;
- avec au moins respectivement une sortie de charge servant au raccordement de charges pouvant être alimentées en énergie électrique provenant du réseau de courant alternatif via les dispositifs de commande de puissance (S1, S2, S3, S4) ;
- avec des moyens de connexion servant à relier l'entrée de réseau à la ou aux sorties de charge ; et
- avec respectivement un moyen de commande servant à commander les moyens de connexion, les moyens de commande étant adaptés et conçus pour commander les moyens de connexion pendant une cadence, tout au plus une fois pendant la durée d'une ou de plusieurs périodes successives de la tension de réseau, en vue de fermer une liaison entre l'entrée de réseau et la sortie de charge ou les sorties de charge, pour ainsi régler la puissance planifiée au niveau des charges ;
- un premier dispositif parmi les dispositifs de commande de puissance (S1) ayant une sortie de commande (6) et un dernier dispositif parmi les dispositifs de commande de puissance (figure 3, S4 ; figure 1, S10 ; figure 2, S5) ayant une entrée de commande (7) ;
- la sortie de commande (6) du premier dispositif de commande de puissance (S1) et l'entrée de commande (7) du dernier dispositif de commande de puissance (figure 3, S4 ; figure 1, S10 ; figure 2, S5) étant au moins reliées entre elles de façon indirecte ;
- le moyen de commande du premier dispositif de commande de puissance (S1) étant adapté et conçu pour produire un premier signal situé au niveau de la sortie de commande (6) de ce dispositif de commande de puissance (S1) lorsque les moyens de connexion de ce dispositif de commande de puissance (S1) s'ouvrent ou sont ouverts ; et
- le moyen de commande du dernier dispositif de commande de puissance (figure 3, S4 ; figure 1, S10 ; figure 2, S5) étant adapté et conçu pour ordonner la fermeture des moyens de connexion dans ce dispositif de commande de puissance (figure 3, S4 et/ou figure 1, S10 ; figure 2, S5) en présence d'un premier signal se trouvant au niveau de l'entrée de commande (7) de ce dispositif de commande de puissance (figure 3, S4 et/ou figure 1, S10 ; Figure 2, S5) ;
**caractérisé en ce que** .
- l'entrée de commande (7) du premier dispositif de commande de puissance n'est pas reliée à un autre dispositif de commande de puissance ; et
- le premier dispositif de commande de puissance (S1) a une commande de tempo interne ; et
- le premier dispositif de commande de puissance (S1) obtient de la commande de tempo interne, toujours au début d'une cadence, un premier signal de démarrage de l'alimentation en énergie des charges raccordées.

2. Agencement de circuit selon la revendication 1, **caractérisé en ce que** l'agencement de circuit comporte exactement deux dispositifs de commande de puissance et que la sortie de commande du premier dispositif de commande de puissance et l'entrée de commande du dernier dispositif de commande de puissance sont directement reliées entre elles.

3. Agencement de circuit selon la revendication 1 ou 2, **caractérisé en ce que** l'agencement de circuit comporte des dispositifs de commande de puissance supplémentaires (figure 3, S2, S3 et/ou figure 1 et 2, S2 à S9) présentant les caractéristiques du premier dispositif de commande de puissance (S1) et du dernier dispositif de commande de puissance (figure 3, S4 et/ou figure 1, S10 ; figure 2, S5), c'est-à-dire comportant une entrée de commande (7) et une sortie de commande (6).

4. Agencement de circuit selon la revendication 3, **caractérisé en ce que** la sortie de commande (6) du premier dispositif de commande de puissance (S1) est directement reliée à l'entrée de commande (7) d'un des dispositifs de commande de puissance supplémentaires (figure 3, S2, S3 et/ou figure 1 et 2, S2 à S9).

5. Agencement de circuit selon la revendication 3 ou 4, **caractérisé en ce que** la sortie de commande (6) de chacun des dispositifs de commande de puissance supplémentaires (figure 3, S2, S3 et/ou figure 1 et 2, S2 à S9) est directement reliée à l'entrée de commande (7) d'un des dispositifs de commande de puissance supplémentaires (figure 3, S2, S3 et/ou figure 1 et 2, S2 à S9) ou du dernier dispositif de commande de puissance (figure 3, S4 et/ou figure 1, S10 ; figure 2, S5) .

6. Agencement de circuit selon l'une quelconque des revendications 3 à 5, **caractérisé en ce que** l'entrée de commande (7) du dernier dispositif de commande de puissance (figure 3, S4 et/ou figure 1, S10 ; figure 2, S5) est directement reliée à la sortie (6) d'un des dispositifs de commande de puissance supplémentaires (figure 3, S2, S3 et/ou figure 1 et 2, S2 à S9).

7. Procédé d'actionnement d'un agencement de circuit selon l'une quelconque des revendications 1 à 6, **caractérisé en ce que** le premier dispositif de commande de puissance (S1) et chaque dispositif de commande de puissance supplémentaire (figure 3, S2, S3 et/ou figure 1 et 2, S2 à S9) mettent à disposition au niveau de leur sortie de commande (6) respective un premier signal lorsque les moyens de connexion s'ouvrent ou sont ouvert dans le premier dispositif de commande de puissance (S1) ou dans les dispositifs de commande de puissance supplémentaires (figure 3, S2, S3 et/ou figure 1 et 2, S2 à S9).

8. Procédé selon la revendication 7, **caractérisé en ce que** le premier signal est mis à disposition sans pause après l'ouverture ou pendant l'ouverture des moyens de connexion.

9. Procédé selon la revendication 7, **caractérisé en ce que** le premier signal est mis à disposition après une pause d'au moins une période de la tension de réseau après l'ouverture des moyens de connexion.

10. Procédé selon l'une quelconque des revendications 7 à 8, **caractérisé en ce que** le moyen de commande de chaque dispositif de commande de puissance supplémentaire (figure 3, S2, S3 et/ou figure 1 et 2, S2 à S9) ou du dernier dispositif de commande de puissance (figure 3, S4 et/ou figure 1, S10 ; figure 2, S5) ordonne la fermeture des moyens de connexion du dispositif de commande de puissance supplémentaire (figure 3, S2, S3 et/ou figure 1 et 2, S2 à S9) ou du dernier dispositif de commande de puissance (figure 3, S4 et/ou figure 1, S10 ; figure 2, S5) en présence d'un premier signal situé au niveau de l'entrée de commande des dispositifs de commande de puissance supplémentaires (figure 3, S2, S3 et/ou figure 1 et 2, S2 à S9) ou du dernier dispositif de commande de puissance (figure 3, S4 et/ou figure 1, S10 ; figure 2, S5).

11. Procédé selon la revendication 10, **caractérisé en ce que** la fermeture des moyens de connexion se produit sans pause après la survenue du premier signal situé au niveau de l'entrée de commande.

12. Procédé selon la revendication 10, **caractérisé en ce que** la fermeture des moyens de connexion se produit après une pause d'au moins une période de la tension de réseau après émission du premier signal situé au niveau de l'entrée de commande.
